# EUROPEAN PATENT APPLICATION

(11) **EP 4 691 859 A1**
(43) Date of publication of application: **11.02.2026**
(21) Application number: 24778839.1
(22) Date of filing: 19.02.2024
(51) Int. Cl.: B60R 21/231, B60N 2/42, B60R 21/207

(54) **VEHICLE REAR SEAT OCCUPANT PROTECTION DEVICE**

(30) Priority: 31.03.2023 JP 2023057758
(71) Applicant: Autoliv Development AB, 44783 Vargarda (SE)
(72) Inventor: MURAKAMI, Sho, Yokohama-shi, Kanagawa 222-8580 (JP); NAKAJIMA, Yutaka, Yokohama-shi, Kanagawa 222-8580 (JP); WANG, Qiansu, Shanghai, 201807 (CN); ZHANG, Pengcheng, Shanghai, 201807 (CN)
(74) Representative: Feucker, Max Martin
(86) International application number: PCT/JP2024/005768
(87) International publication number: WO 2024/202694

(57) **Abstract**

PROBLEM

To provide a vehicle rear seat occupant protection device with improved occupant restraint performance.

RESOLUTION MEANS

An airbag cushion 108 of an airbag device 100 includes:
a cushion front surface part 118 that extends conforming to a seat rear surface part 112;
a cushion upper surface part 122 that extends rearward from an upper end of the cushion front surface part 118;
a cushion lower surface part 124 that extends rearward from a lower end of the cushion front surface part 118; and
a cushion rear surface part 126 that connects a rear end of the cushion upper surface part 122 and a rear end of the cushion lower surface part 124. The seat rear surface part 112 includes a rear surface upper part 112a near the upper end of the seatback 106 and a rear surface curved part 112b that curves convexly forward from the rear surface upper part 112a. The cushion front surface part 118 includes a front surface upper part 118a extending along the rear surface upper part 112a, and a front surface bulge part 118b formed below the front surface upper part 118a and bulging forward from the front surface upper part along the rear surface curved part 112b.

## Description

### TECHNICAL FIELD

The present invention relates to a vehicle rear seat occupant protection device for restraining rear seat occupants.

### BACKGROUND ART

Airbag devices have generally become standard equipment in vehicles in recent years. An airbag device is a safety device which is operated in the event of an emergency such as a vehicle collision, retaining and protecting occupants utilizing an airbag cushion which expands and deploys based on gas pressure. There are various types of airbag devices depending on the installation site and application. For example, in a driver's seat, a front airbag is provided in the center of a steering wheel. Furthermore, in a front passenger seat, a passenger airbag is provided on an instrument panel or a peripheral area thereof.

Currently, airbag devices have also been developed to protect rear seat occupants. For example, FIG. 1 of Patent Document 1 discloses an airbag 1 that expands and deploys rearward from the seat rear surface part of the seatback of the front seat 1. The airbag 1 can suitably restrain an occupant 3 in a rear seat 4 from the front.

### RELATED ART DOCUMENTS

### PATENT DOCUMENTS

Patent Document 1: Chinese Utility Model No. 202283906

### SUMMARY OF THE INVENTION

However, the seatbacks of the seats are often smooth areas covered with skin. Therefore, the airbag cushion for protecting the rear seat occupant may not receive much reaction force from the seatback when pushed forward by the rear seat occupant.

### PROBLEM TO BE SOLVED BY THE INVENTION

An object of the present invention is to provide a vehicle rear seat occupant protection device with improved occupant restraining performance.

### MEANS FOR SOLVING THE PROBLEM

To resolve the problems described above, a typical configuration of a vehicle rear seat occupant protection device according to the present invention includes:
a seat rear surface part that forms a rear surface of a seatback of a vehicle seat;
an airbag cushion that is stowed in the seat rear surface part in a prescribed stowed state and that expands and deploys between the seat rear surface part and a rear seat occupant seated in a rear seat located rearward of the vehicle seat; and
an inflator that supplies gas to the airbag cushion, wherein
the airbag cushion includes:
   a cushion front surface part that extends in a vertical direction along the seat rear surface part;
   a cushion upper surface part that extends rearward from an upper end of the cushion front surface part;
   a cushion lower surface part that extends rearward from a lower end of the cushion front surface part; and
   a cushion rear surface part that connects a rear end of the cushion upper surface part and a rear end of the cushion lower surface part in the vertical direction, and
   the cushion front surface part includes:
      a flat part that extends along the seat rear surface part; and
      a bulge part that is formed above or below the flat part and protrudes forward relative to the flat part.

The airbag cushion has a bulge part on the cushion front surface part, enabling the cushion to more readily come into contact with the seat rear surface part of the seatback of the seat. Therefore, when a rear seat occupant comes into contact with the airbag cushion from the back, the cushion front surface part comes into broad contact with the seat rear surface part of the seatback of the seat, generating a reaction force, enabling the rear seat occupant to be restrained while maintaining a more stable orientation.

The seat rear surface part has a rear surface upper part near the upper end of the seatback, and a rear surface curved part that curves convexly forward from the rear surface upper part and extends toward the seat cushion of the seat below, and a flat part extends conforming to the rear surface upper part, and the bulge part may be formed below the flat part and bulge forward along the rear surface curved part.

The seat rear surface part of a typical seat bag has a shape in which the rear surface upper part is raised rearward compared to the rear surface curved part, but in the above configuration, the upper flat part of the cushion front surface part of the airbag cushion is shaped to be retracted rearward compared to the lower bulge part. Therefore, when the airbag cushion expands and deploys, the flat part prevents excessive pressure from being applied to the rear surface upper part of the seat rear surface part, while the flat part and the bulge part come into contact conforming to the rear surface upper part and the rear surface curved part, respectively, thereby reducing up-and-down and front-to-back swaying and enabling the airbag cushion to expand and deploy in a more stable manner. Therefore, the above configuration can provide a vehicle rear seat occupant protection device with improved occupant restraint performance.

When the airbag cushion is viewed from the side, a tangent line to the cushion upper surface part and a tangent line to the cushion rear surface part may intersect at an acute angle.

According to the above configuration, the upper corner part formed by the cushion upper surface part and the cushion rear surface part has an acute angle, so that the head part of the occupant is likely to come into contact with the upper corner part. Furthermore, since the above-mentioned bulge part is provided at the diagonal corner of the upper corner part, this configuration enables the airbag cushion to efficiently absorb the load received from the rear seat occupant.

When the head part of a rear seat occupant comes into contact with the corner part between the cushion upper surface part and the cushion rear surface part, the cushion front surface part may come into contact with the seat rear surface part, and the cushion lower surface part may come into contact with the thighs of the rear seat occupant.

According to the above configuration, the airbag cushion uses the seat rear surface part and the thighs of the rear seat occupant as reaction surfaces in order to restrain the head part and upper body of the rear seat occupant in a more stable orientation.

The vehicle rear seat occupant protection device may further include a gas supply part provided on the seat rear surface part for supplying gas to the airbag cushion.

According to the above configuration, gas can be efficiently supplied to the airbag cushion shaped to conform to the rear surface upper part and the rear surface curved part.

The airbag cushion may further include a gas receiving part formed in the flat part and connected to a gas supply part.

As described above, the cushion front surface part has a shape in which the upper flat part is retracted further rearward than the lower bulge part, thereby preventing the flat part from excessively pressing against the rear surface upper part of the seat rear surface part. Furthermore, since a gas receiving part is provided at the top of the bulge part, when gas is received from the gas receiving part, the upper flat part and the lower bulge part expand and deploy so that they come into contact along the rear surface upper part and the rear surface curved part, respectively, thereby enabling suppression of up-and-down and front-to-back swaying of the airbag cushion.

The airbag cushion may have a pair of side panels that form the airbag side surface parts on both sides of the airbag cushion in the width direction, and a strip-shaped main panel that connects the edges of the pair of side panels and forms the cushion front surface part, the cushion upper surface part, cushion lower surface part, and cushion rear surface part.

According to the aforementioned configuration, the airbag cushion can be achieved with a simpler panel configuration.

When viewed from the side, the airbag cushion in the aforementioned stowed form may have an upper folded part in which the portion above the gas receiving part is rolled or folded toward the gas receiving part, and a lower folded part in which the portion below the gas receiving part is rolled or folded toward the gas receiving part.

According to the above configuration, the airbag cushion in the stowed form expands and deploys the central part toward the rear seat occupant in the vertical direction while the upper folded part and lower folded part deploy upward and downward, respectively, thereby enabling the occupant to be quickly restrained and the seatback to come into contact with the seat rear surface part of the seatback.

The bulge part may be formed above the flat part. This configuration also facilitates the airbag cushion to come into contact with the seat rear surface part of the seatback due to the bulge part. Therefore, when a rear seat occupant comes into contact with the airbag cushion from the back, the cushion front surface part comes into broad contact with the seat rear surface part of the seatback of the seat, generating a reaction force, enabling the rear seat occupant to be restrained while maintaining a more stable orientation.

The cushion rear surface part may extend along the shins of a rear seat occupant normally seated in the rear seat. This configuration enables the airbag cushion to maintain a more stable orientation and restrain the shins of the rear seat occupant.

When the airbag cushion is viewed from the side, a tangent line to the cushion upper surface part and a tangent line to the cushion rear surface part may intersect at an acute angle.

With the aforementioned configuration, the cushion rear surface part can be deployed parallel to the shins of the rear seat occupant, thereby broadly restraining the shins of the rear seat occupant.

The airbag cushion may further include a strip-shaped auxiliary member having a first end connected to the cushion lower surface part and a second end connected to the seat rear surface part, and the auxiliary member may be deployed conforming to the cushion lower surface part.

The aforementioned auxiliary member can suppress vertical swaying of the airbag cushion upon expansion and deployment, and can suppress the upward movement of the airbag cushion while restraining an occupant. Therefore, with the above configuration, a vehicle rear seat occupant protection device can be provided with improved occupant restraint performance.

The first end may be connected to the cushion rear surface part side of the cushion lower surface part. With this configuration, the tension of the auxiliary member can be transmitted to the cushion rear surface part of the airbag cushion, and thus swaying of the airbag cushion can be efficiently suppressed.

### EFFECT OF THE INVENTION

The present invention can provide a vehicle rear seat occupant protection device with improved occupant restraint performance.

### BRIEF DESCRIPTION OF THE DRAWINGS

FIG. 1 is a diagram depicting an outline example of a vehicle rear seat occupant protection device according to an embodiment of the present invention;
FIG. 2 is a perspective view depicting only the airbag cushion of FIG. 1(b);
FIG. 3 is a side view of the airbag cushion of FIG. 2(a);
FIG. 4 is an exploded view of the panels forming the airbag cushion of FIG. 2(b);
FIG. 5 is a diagram depicting the process of folding the airbag cushion of FIG. 2(b);
FIG. 6 is a diagram depicting the process of expansion and deployment of the airbag cushion in the stowed state of FIG. 5(d);
FIG. 7 is a diagram depicting the process of the airbag cushion of FIG. 1(b) restraining the occupant;
FIG. 8 is a diagram depicting a relationship between an occupant and an airbag cushion different from that of FIG. 7;
FIG. 9 is a diagram depicting an outline example of a vehicle rear seat occupant protection device according to Embodiment 2 of the present invention;
FIG. 10 is a view depicting only the airbag cushion of FIG. 9(b);
FIG. 11 is a side view of the airbag cushion of FIG. 10(b); and
FIG. 12 is a diagram depicting the process of the airbag cushion of FIG. 9(b) restraining the occupant.

### EMBODIMENTS OF THE INVENTION

Preferred embodiments according to the present invention will hereinafter be described in detail with reference to the attached drawings. Dimensions, materials, other specific numerical values, and the like indicated in the embodiments are merely examples for ease of understanding of the invention and do not limit the present invention unless otherwise noted. Note that in the present specification and drawings, elements having essentially identical functions and configurations are labeled with identical symbols in order to omit redundant descriptions, and illustrations of elements not directly related to the present invention are omitted.

### Embodiment 1

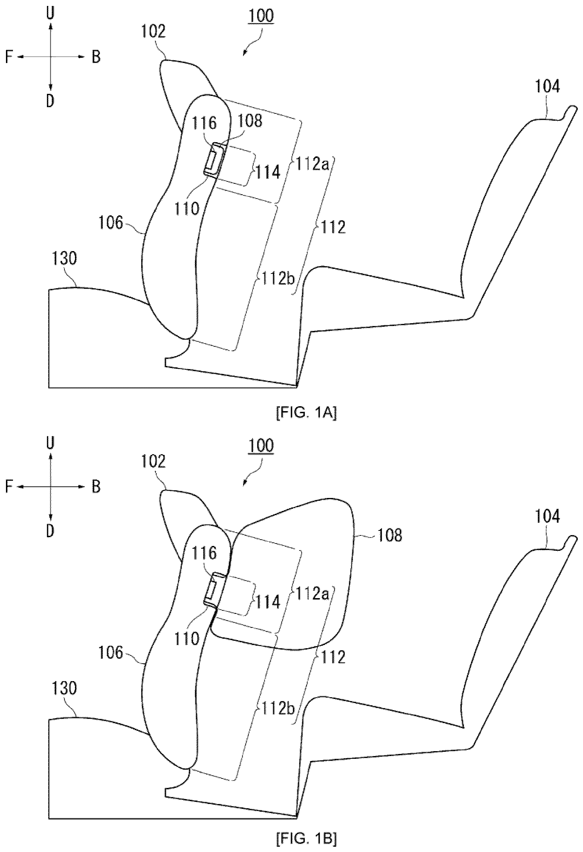

FIG. 1 is a diagram depicting an outline example of a vehicle rear seat occupant protection device (hereinafter referred to as an airbag device 100) according to Embodiment 1 of the present invention. FIG. 1(a) is a diagram depicting a state before activation of the airbag device 100. The airbag device 100 of the present embodiment is installed on a seatback 106 of a front seat 102 as an example of a seat, and is implemented as a restraint device for restraining a rear seat occupant seated in a rear seat 104 from the front.

Since seats may be able to rotate back and forth within the vehicle, and the front-to-back direction of the seat may not coincide with the front-to-back direction of the vehicle, the directions used in the following explanation will be primarily based on the seat. For example, in each of the drawings from FIG. 1(a) onwards, the front-to-back direction of the front seat 102 in the standard position is indicated by arrows F (Forward) and B (Back), the left and right width directions of the front seat 102 are indicated by arrows L (Left) and R (Right), and the vertical direction of the vehicle is indicated by arrows U (Up) and D (Down). Of these, "upward" refers to the direction of the head part of an occupant properly seated in a seat, and "downward" refers to the direction of the lower legs of the occupant. In addition, with respect to the seatback 106 of the front seat 102, the side that comes into contact with a front seat occupant seated in the front seat 102 is referred to as the front side, and the side opposite the front seat occupant is referred to as the back side.

Before activation, an airbag cushion 108 of the airbag device 100 is stowed in a stowing part 110 in a rolled or folded compact storage form. The stowing part 110 is installed in a seat rear surface part 112 that forms the back of the seatback 106 of the front seat 102 with an opening part 114 facing the rear seat 104 at the rear. An inflator 116, which is a gas generating device, is also installed inside the stowing part 110.

The inflator 116 is an apparatus that supplies gas to the airbag cushion 108, and in the present embodiment, a disk-shaped type is used. Examples of currently prevailing inflators include: types which are filled with a gas-generating agent and burn the agent to generate gas; types which are filled with compressed gas and supply gas without generating heat; hybrid types which utilize both combustion gas and compressed gas; and the like. Any of these types can be used for the inflator 116.

FIG. 1(b) is a diagram depicting a vehicle after activation of the driver seat airbag device 100. The airbag device 100 is activated when a frontal collision is predicted or detected by various sensors.

The inflator 116 is activated upon receiving a signal from a control unit (not depicted) and ejects gas. The airbag cushion 108 cleaves the cover of the stowing part due to the pressure of gas supplied from the inflator 116, and expands and deploys toward the rear seat.

The airbag cushion 108 expands and deploys between the seat rear surface part 112 of the seatback 106 of the front seat 102 and a rear seat occupant seated in the rear seat 104 behind the front seat 102, restraining the rear seat occupant from the front and preventing the rear seat occupant from moving forward.

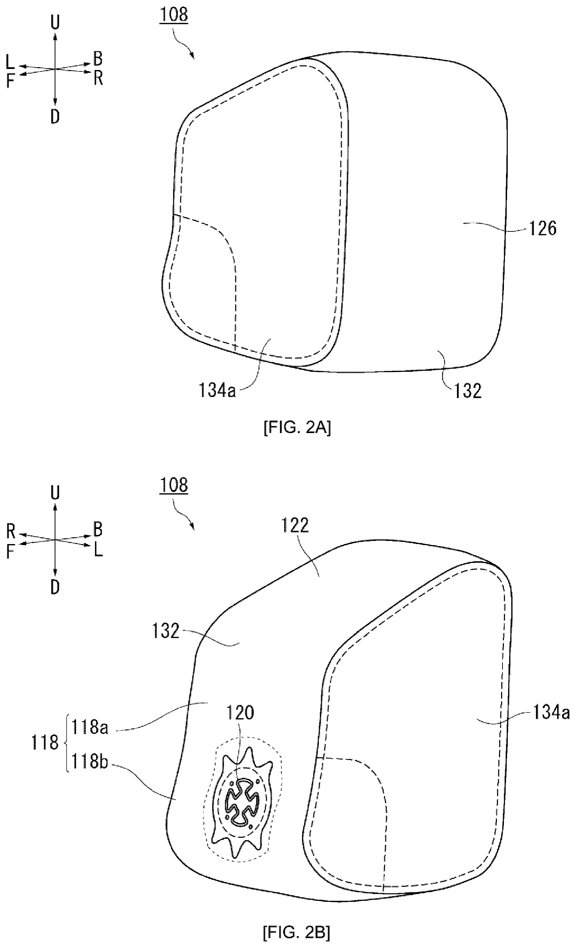

FIG. 2 is a perspective view depicting only the airbag cushion 108 of FIG. 1(b). FIG. 2(a) is a perspective view of the airbag cushion 108 of FIG. 1 (b) as seen from the rear left side. As depicted in FIG. 2, the airbag cushion 108 has a shape similar to a cube when viewed from the rear, and primarily uses a rear cushion rear surface part 126 to support the body of a rear seat occupant.

FIG. 2(b) is a perspective view of the airbag cushion 108 of FIG. 1(b) as seen from the front left side. A gas receiving part 120 is provided below a front cushion front surface part 118 on the front side of the airbag cushion 108. The gas receiving part 120 is connected to the inflator 116 (depicted) and receives gas from the inflator 116.

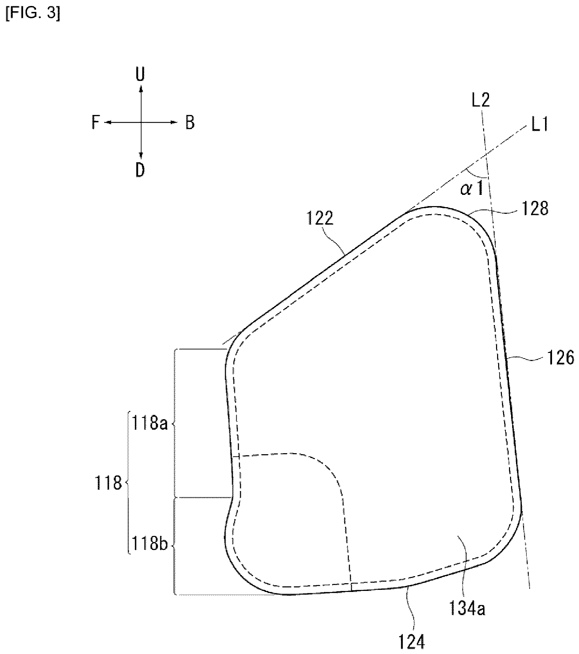

FIG. 3 is a side view of the airbag cushion 108 of FIG. 2(a). The airbag cushion 108 has a cushion rear surface part 126 that is larger in the vertical dimension than the cushion front surface part 118, and is shaped so that the vertical dimension gradually increases toward the rear as viewed overall.

The cushion front surface part 118 forms the front surface of the airbag cushion 108 and extends in the vertical direction along the seat rear surface part 112 (see FIG. 1(b)). A cushion upper surface part 122 forms the upper surface of the airbag cushion 108 and extends rearward from the upper end of the cushion front surface part 118. A cushion lower surface part 124 forms the lower surface of the airbag cushion 108 and extends rearward from the lower end of the cushion front surface part 118. The cushion rear surface part 126 is a part that forms the rear surface of the airbag cushion 108, and connects the rear end of the cushion upper surface part 122 and the rear end of the cushion lower surface part 124 in the vertical direction.

When viewed from the side, the airbag cushion 108 is shaped so that the angle α1 between the tangent line L1 to the cushion upper surface part 122 and the tangent line L2 to the cushion rear surface part 126 is an acute angle (0°<α1<90°). In other words, an upper corner part 128 on the rear upper side of the airbag cushion 108 formed by the cushion upper surface part 122 and the cushion rear surface part 126 is formed to have an acute angle. This configuration facilitates the head part of a rear seat occupant to come into contact with the upper corner part 128, as will be described later.

The cushion front surface part 118 is shaped to fit the seat rear surface part 112 of the seatback 106 (see FIG. 1(b)). The seat rear surface part 112 is a part that forms the back surface of the seatback 106 of the front seat 102 of the vehicle. The seat rear surface part 112 is formed to include an upper rear surface upper part 112a and a lower rear surface curved part 112b.

A rear surface upper part 112a in FIG. 1(b) is a part formed near the upper end of the seatback 106, and is the back surface of the portion that supports the shoulders of a front seat occupant seated in the front seat 102. The rear surface upper part 112a extends in the vertical direction when the seatback 106 is at the standard angle.

The rear surface curved part 112b is a rear surface that mainly supports the back and waist of a front seat occupant, and extends downward toward a seat cushion 130 while curving forward from the upper rear surface upper part 112a.

The cushion front surface part 118 in FIG. 3 is formed to include an upper front surface upper part 118a which is a flat part, and a lower front surface bulge part 118b which is a bulge part. The front surface upper part 118a extends linearly along the rear surface upper part 112a of the seat rear surface part 112 (see FIG. 1(b)).

The front surface bulge part 118b is formed below the front surface upper part 118a and bulges forward from the front surface upper part 118a along the rear surface curved part 112b (see FIG. 1(b)). The front surface bulge part 118b is formed in the cushion front surface part 118 mainly in a range below the center in the vertical direction.

Note that in the present embodiment, the front surface bulge part 118b is formed to bulge forward including the lower end of the cushion front surface part 118, but the central portion of the lower half of the cushion front surface part 118 that does not include the lower end may also be formed to bulge forward.

As shown in FIG. 1(b), the seat rear surface part 112 of the seatback 106 generally has an upper rear surface upper part 112a that protrudes rearward compared to the rear surface curved part 112b. In response to this, in the present embodiment, the upper front surface upper part 118a of the cushion front surface part 118 of the airbag cushion 108 is configured to be retracted rearward compared to the lower front surface bulge part 118b.

The gas receiving part 120 in FIG. 2(b) is provided on the upper part of the front surface bulge part 118b and is connected to the inflator 116 (FIG. 1(b)) which is a gas supply part. As described above, when the airbag cushion 108 is expanded and deployed, the front surface upper part 118a is retracted further rearward than the front surface bulge part 118b, thereby preventing the front surface upper part 118a from excessively pressing against the rear surface upper part 112a of the seat rear surface part 112. Furthermore, since the gas receiving part 120 is provided at the top of the front surface bulge part 118b, when gas is received from the gas receiving part 120, the upper front surface upper part 118a and the lower front surface bulge part 118b, as viewed from the gas receiving part 120, come into contact along the rear surface upper part 112a and the rear surface curved part 112b, respectively. These allow the airbag cushion 108 to expand and deploy with more stable behavior by suppressing up-and-down and front-and-rear rocking.

As depicted in FIG. 1(b), in the airbag device 100 of the present embodiment, the gas supply part is such that the inflator 116 and the airbag cushion 108 are directly connected, and the gas supply part that supplies gas to the airbag cushion 108 is formed by the inflator 116 itself.

The inflator 116 is provided below the rear surface upper part 112a or above the rear surface curved part 112b, and supplies gas directly to the airbag cushion 108 therefrom. The inflator 116 provided at this position provides a gas supply part that can efficiently supply gas to the rear surface upper part 112a of the seatback 106 and the airbag cushion 108, which is shaped to follow the curve of the back surface.

Note that in the present embodiment, the gas supply part is achieved by installing the inflator 116 in the seat rear surface part 112 of the seatback 106, but the configuration of the gas supply part is not limited to this. For example, a configuration may be adopted in which the inflator is provided at the bottom of the rear surface curved part 112b of the seatback 106, from which extends a pipe-shaped gas guide with an outlet provided as a gas supply part at the rear surface upper part 112a.

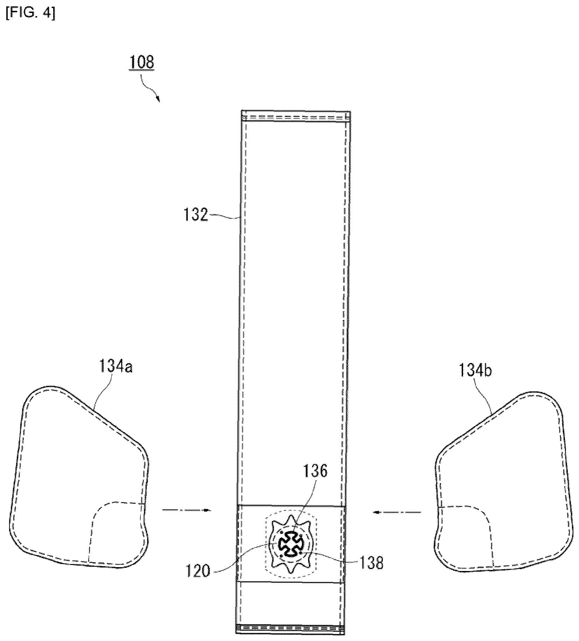

FIG. 4 is an exploded view of the panels forming the airbag cushion 108 of FIG. 2(b). Each panel depicted in FIG. 4 is the inner surface of the airbag cushion 108. The airbag cushion 108 is composed of a central main panel 132 and a pair of left and right side panels 134a and 134b.

The side panels 134a and 134b are provided as a pair symmetrically on the left and right in the width direction of the airbag cushion 108 (see FIG. 2(a)), and form both side parts of the airbag cushion 108 in the width direction.

The main panel 132 has an elongated strip shape, and the edges of the pair of side panels 134a and 134b are connected to the main panel by sewing or the like. The ends of both sides of the main panel 132 in the longitudinal direction are joined to each other by sewing or the like. The main panel 132 forms the cushion front surface part 118, the cushion upper surface part 122, the cushion lower surface part 124 and the cushion rear surface part 126.

The main panel 132 is provided with a gas receiving part 120 that is connected to the inflator 116 (see FIG. 1(b)). The gas receiving part 120 has a through hole 136 formed in the center, into which part of the inflator 116 is inserted, and a plurality of bolt holes 138 are provided around the through hole, into which stud bolts of the inflator 116 are inserted. The gas receiving part 120 is connected to the central bottom of the stowing part 110 with a part of the inflator 116 inserted therein, for example, by using the bolt holes 138.

In this manner, the airbag cushion 108 can be achieved with a simpler panel configuration using a total of three panel members: the main panel 132 and the pair of side panels 134a and 134b.

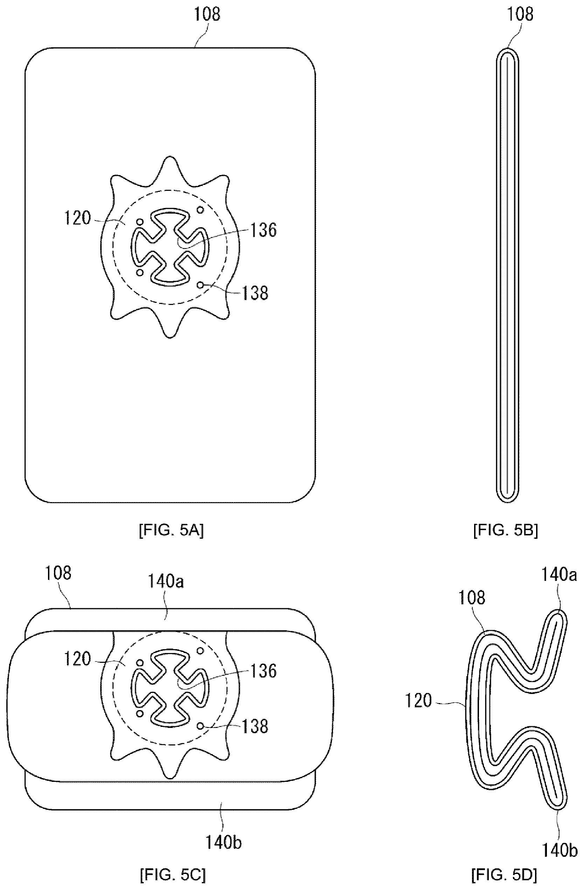

FIG. 5 is a diagram depicting the process of folding the airbag cushion 108 of FIG. 2(b). FIG. 5(a) is a diagram depicting the airbag cushion 108 of FIG. 2(b) folded in the front-to-back direction. To form the stowed form, the airbag cushion 108 is first compressed in the front-to-back direction.

FIG. 5(b) is a side view of the airbag cushion 108 of FIG. 5(b) The airbag cushion 108 is compressed in the front-to-back direction and folded into a vertically elongated shape.

FIG. 5(c) is a diagram depicting the airbag cushion 108 of FIG. 5(a) folded in the vertical direction. The airbag cushion 108 is folded at with the top and bottom facing the gas receiving part 120 to form a compressed stowed configuration.

FIG. 5(d) is a side view of the airbag cushion 108 of FIG. 5(c). When viewed from the side, the airbag cushion 108 in the stowed form has an upper folded part 140a formed by rolling or folding the part above the gas receiving part 120 toward the gas receiving part 120, and a lower folded part 140b formed by rolling or folding the portion below the gas receiving part 120 toward the gas receiving part 120.

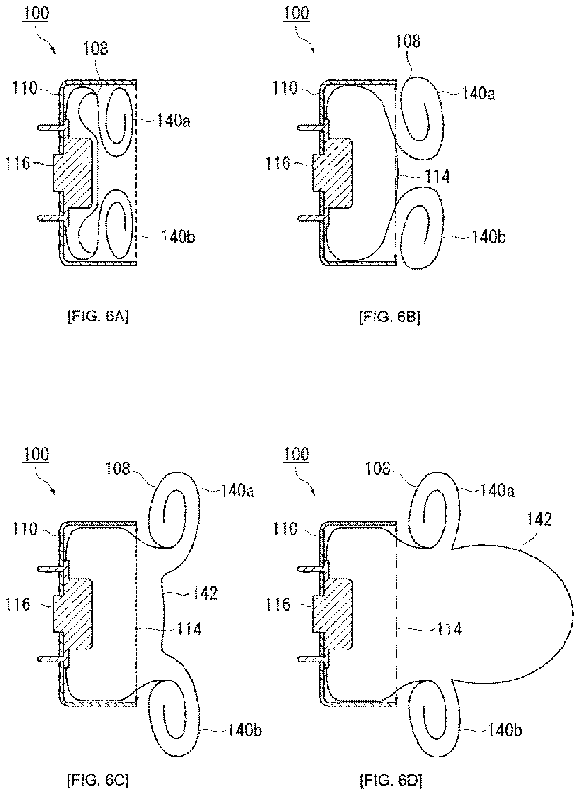

FIG. 6 is a diagram depicting the process of expansion and deployment of the airbag cushion 108 in the stowed state shown in FIG. 5(d). FIG. 6(a) is a diagram depicting a state of the airbag device 100 before activation. In the stowed state, the airbag cushion 108 has an upper folded part 140a stowed above the inflator 116 and a lower folded part 140b stowed below the inflator 116.

FIG. 6(b) is a diagram depicting a state in which the airbag device 100 of FIG. 6(a) is activated. When the inflator 116 is activated, gas is supplied to the airbag cushion 108, causing the internal pressure to increase, and the airbag cushion 108 expands rearward while cleaving open the cover of the stowing part 110.

FIG. 6(c) is a diagram depicting a state in which the airbag device 100 of FIG. 6(b) has been activated. When the airbag cushion 108 emerges rearward from the opening part 114 of the stowing part 110, the central part 142 expands rearward, the upper folded part 140a expands upward, and the lower folded part 140b expands downward.

FIG. 6(d) is a diagram depicting a state in which the airbag device 100 depicted in FIG. 6(c) has been further activated. Continuing from FIG. 6(c), the airbag cushion 108 expands and deploys such that the central part 142 in the vertical direction is expanded toward the rear seat occupant, while the upper folded part 140a and the lower folded part 140b are deployed upward and downward, respectively.

In this manner, the airbag cushion 108 in the stowed form is provided with an upper folded part 140a and a lower folded part 140b, which enables the airbag cushion to quickly restrain the occupant and contact the seat rear surface part 112 of the seatback 106 of the front seat 102 (see FIG. 1 (b)).

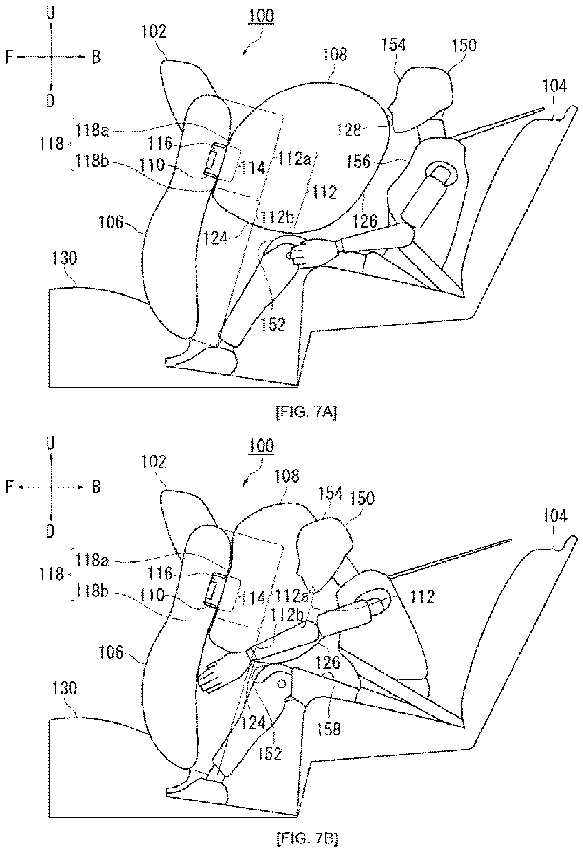

FIG. 7 is a diagram that depicts the process of the airbag cushion 108 of FIG. 1(b) restraining the occupant 150. FIG. 7(a) is a diagram depicting the appearance of the airbag cushion 108 immediately after expansion and deployment.

The occupant 150 is an AF05 dummy, which is a Hybrid III dummy used in frontal collision tests for automobiles. AF05 is a human body dummy modeled after a woman of petite build, who is 145 cm tall, sits 79 cm high, and weighs approximately 45 kg. Each anthropomorphic dummy, including the AF05 dummy, is manufactured based on the standards of the National Highway Traffic Safety Association (NHTSA).

The stowing part 110 and the airbag cushion 108 of the airbag device 100 are configured so that the airbag cushion 108 is expanded and deployed at a position above the knees 152 of a small-sized female occupant 150 seated in a normal posture in the rear seat 104. In other words, the airbag cushion 108 is installed at a height that enables the airbag cushion to expand and deploy smoothly without interfering with the legs of the occupant 150.

The airbag cushion 108 is installed so that the upper corner part 128 is positioned approximately in front of the head part 154 of the occupant 150. As a result, the occupant 150 comes into contact with the airbag cushion 108 from the upper corner part 128. Furthermore, the cushion rear surface part 126 is set to be approximately parallel to the chest 156 of the occupant 150 when viewed from the side, and thereby deflection of the chest 156 of the occupant 150 can be suppressed.

FIG. 7(b) is a diagram depicting the occupant 150 of FIG. 7(a) entering into the airbag cushion 108. When the head part 154 and upper body of the occupant 150 fall forward due to inertia of a frontal collision, the airbag cushion 108 restrains and protects the occupant 150 from the front.

When the occupant 150 comes into contact with the upper corner part 128 and the cushion rear surface part 126 of the airbag cushion 108, the cushion front surface part 118 comes into surface contact with the seat rear surface part 112 and the cushion lower surface part 124 comes into surface contact with the thighs 158 of the occupant 150. In this manner, the airbag cushion 108 expands and deploys to fill the space between the seat rear surface part 112 and the area from the thighs 158 to the upper body of the occupant 150, thereby fully supporting the body of the occupant 150 and efficiently absorbing the kinetic energy of the occupant 150 in an emergency.

As described above, the airbag cushion 108 of the present embodiment is formed such that the shapes of the front surface upper part 118a and the front surface bulge part 118b of the cushion front surface part 118 are formed to conform to the shapes of the rear surface upper part 112a and the rear surface curved part 112b of the seatback 106 of the front seat 102. Therefore, when the rear seat occupant 150 contacts the airbag cushion 108 from behind, the cushion front surface part 118 comes into wide surface contact with the seat rear surface part 112 of the seatback 106 of the front seat 102, thereby obtaining a reaction force from the seat rear surface part 112 and enabling restraint of the rear seat occupant 150 while maintaining a more stable orientation.

Furthermore, the upper front surface upper part 118a of the cushion front surface part 118 is shaped to retreat further rearward than the lower front surface bulge part 118b. With this configuration, when the airbag cushion 108 expands and deploys, the front surface upper part 118a is prevented from pressing excessively against the rear surface upper part 112a of the seat rear surface part 112, and the front surface upper part 118a and the front surface bulge part 118b come into contact together along the rear surface upper part 112a and the rear surface curved part 112b, respectively, thereby reducing up-and-down and front-and-back swaying and thereby enabling a more stable expansion and deployment. These configurations enable achieving an airbag device 100 with improved occupant restraint performance.

The airbag cushion 108 has an upper corner part 128 that is sharply angled, thus facilitating the head part 154 of the occupant 150 to come into contact with the upper corner part 128. The front surface bulge part 118b described above is provided at the diagonal corner of the upper corner part 128. With this configuration, the airbag cushion 108 is able to efficiently absorb the load received from the rear seat occupant 150 by distributing the load of the occupant 150 applied from the upper corner part 128 to the seatback 106 via the front surface bulge part 118b.

As described above, when the head part 154 of the rear seat occupant 150 comes into contact with the upper corner part 128, the cushion front surface part 118 comes into contact with the seat rear surface part 112, and the cushion lower surface part 124 comes into contact with the thighs 158 of the rear seat occupant 150. With this configuration, the airbag cushion 108 utilizes the seat rear surface part 112 and the thighs 158 of the rear seat occupant 150 as reaction surfaces, enabling the head part 154 and upper body of the rear seat occupant 150 to be restrained in a more stable position.

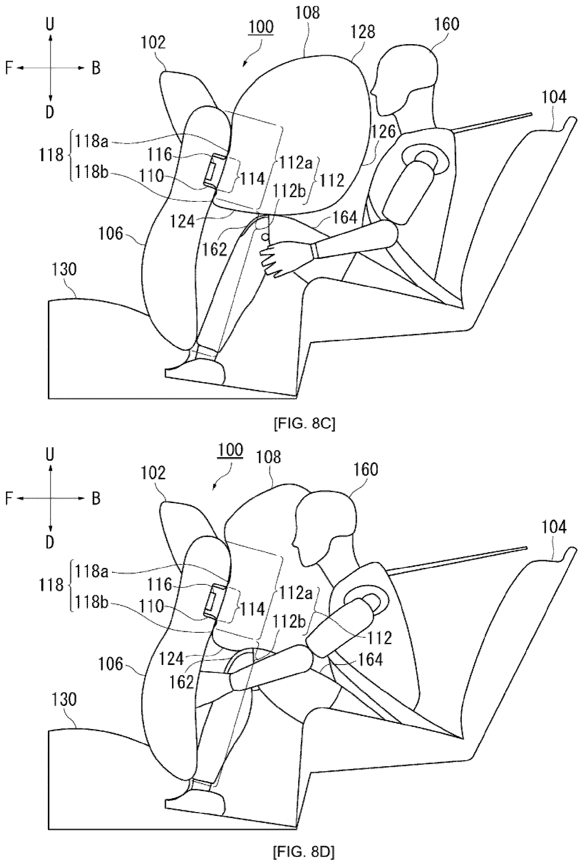

FIG. 8 is a diagram depicting a relationship between the airbag cushion 108 and an occupant 160 that is different from that shown in FIG. 7. FIG. 8(a) is a diagram depicting the airbag cushion 108 and the occupant 160, corresponding to FIG. 7(a).

The occupant 160 is an AM95 dummy, which is one of Hybrid III dummies that are human body dummies used in frontal collision tests for automobiles. The AM95 dummy is a human body dummy modeled after an adult U.S. male of large build, standing 183 cm tall, sitting 94 cm high, and weighing approximately 101 kg.

The stowing part 110 of the airbag device 100 and the airbag cushion 108 can also be provided such that, in correspondence with a large-build male occupant 160 seated in a normal posture on the rear seat 104, the airbag cushion 108 expands and deploys at a position above the knees 162 of the occupant 160.

FIG. 8(b) is a diagram depicting the occupant 160 of FIG. 8(a) entering into the airbag cushion 108. Even when the airbag cushion 108 restrains the occupant 160, the cushion front surface part 118 comes into surface contact with the seat rear surface part 112 and the cushion lower surface part 124 comes into surface contact with the thighs 164 of the occupant 160, thereby enabling the airbag cushion 108 to fully support the body of the occupant 160 and efficiently absorb the kinetic energy thereof.

As described above, the airbag cushion 108 of the present embodiment can be installed to accommodate occupants of various builds, such as the female occupant 150 in FIG. 7 and the male occupant 160 in FIG. 8. In addition, by setting the installation position of the airbag cushion 108 based on the height of the seat surface of the seat cushion of the rear seat 104, restraint performance of the airbag cushion can be exerted even on occupants with different physiques, such as occupant 150 and occupant 160.

### Embodiment 2

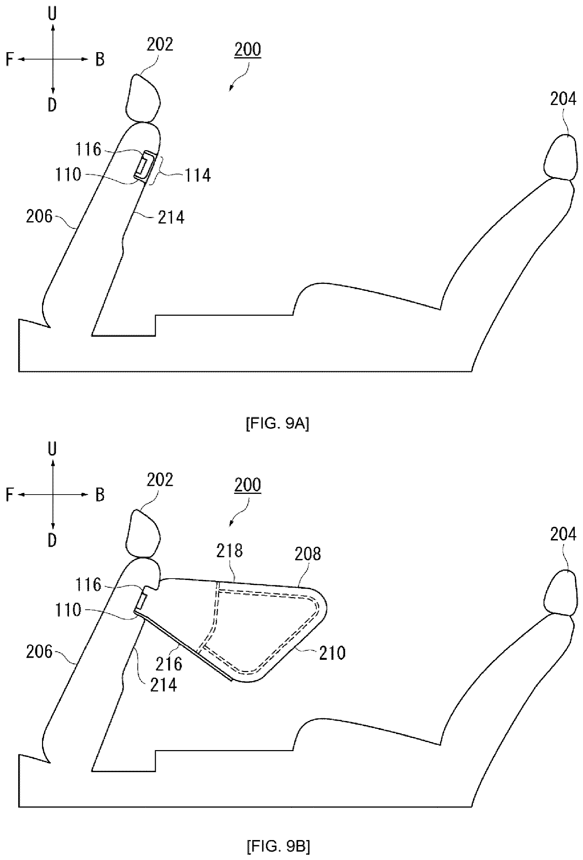

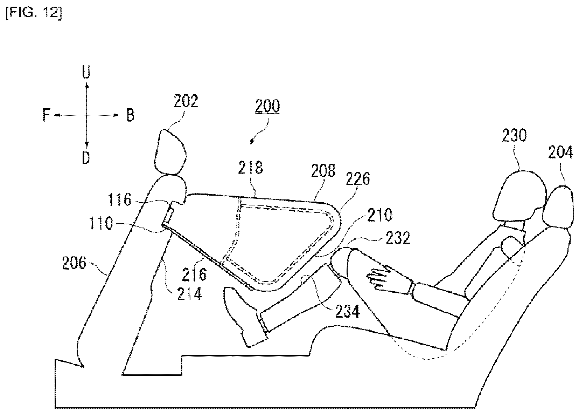

FIG. 9 is a diagram depicting an outline example of a vehicle rear seat occupant protection device (hereinafter referred to as a knee airbag device 200) according to Embodiment 2 of the present invention. In Embodiment 2, the vehicle rear seat occupant protection device is implemented as a knee airbag device 200 that restrains knees 232 of an occupant in a rear seat 204 (see FIG. 12) from the front.

FIG. 9(a) is a diagram depicting a state before the knee airbag device 200 is activated. The knee airbag device 200 of the present embodiment is installed in a seatback 206 of a front seat 202.

FIG. 9(b) is a diagram depicting a state after the knee airbag device 200 has been activated. The knee airbag device 200 is activated when a frontal collision is predicted or detected by various sensors, and expands and deploys an airbag cushion 208.

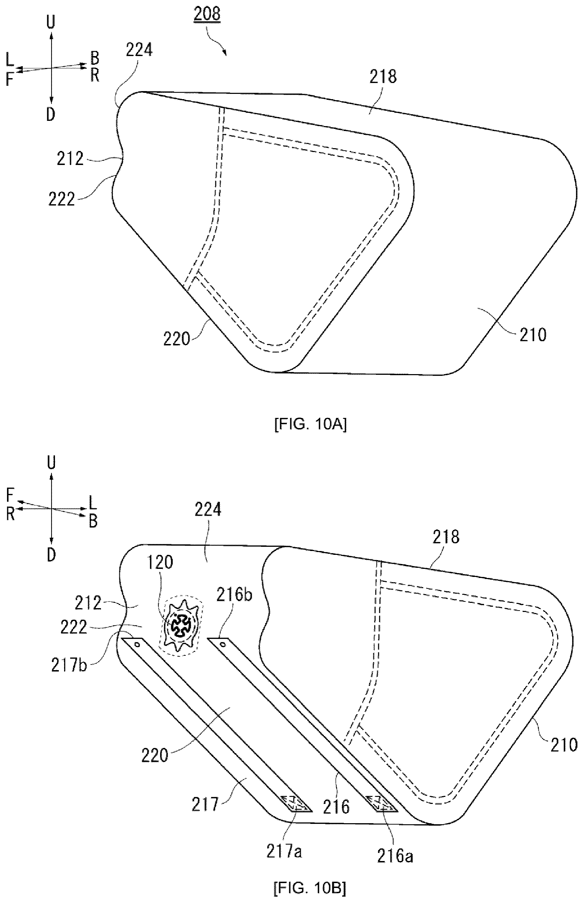

FIG. 10 is a diagram depicting only the airbag cushion 208 of FIG. 9(b). FIG. 10(a) is a perspective view of the airbag cushion 208 of FIG. 9(b) as seen from the rear left side.

The airbag cushion 208 mainly utilizes a rear cushion rear surface part 210 on the rear side to restrain the area from the knees 232 to the shins 234 of an occupant 230 in the rear seat 204 (see FIG. 12). The cushion rear surface part 210 is set to a width that corresponds to the seating range of the occupant 230 in the rear seat 204.

FIG. 10(b) is a perspective view of the airbag cushion 208 of FIG. 9(b) as seen from the front left side. A front cushion front surface part 212 of the airbag cushion 208 comes into contact with a seat rear surface part 214 (see FIG. 12), and therefore has a width set in accordance with the seat rear surface part 214.

The airbag cushion 208 has strip-shaped auxiliary members 216 and 217. A total of two auxiliary members 216 and 217 are provided, and apply tension to the airbag cushion 208 to suppress swaying or movement. The auxiliary members 216 and 217 have first ends 216a and 217a connected to the cushion lower surface part 220 and second ends 216b and 217b connected to the inside of the stowing part 110 of the seat rear surface part 214.

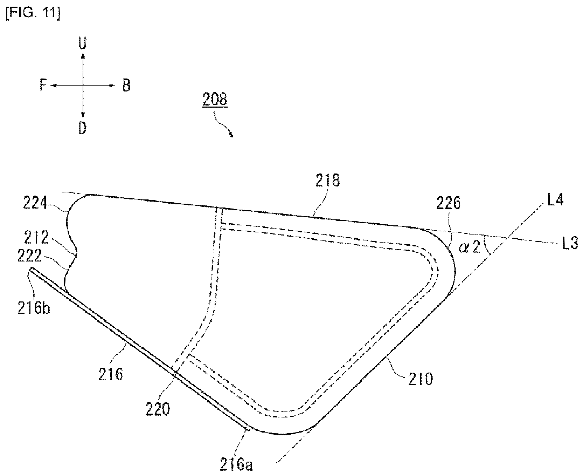

FIG. 11 is a side view of the airbag cushion 208 of FIG. 10(b). The airbag cushion 208 has a shape in which the cushion rear surface part 210 is larger in vertical dimension than the cushion front surface part 212, and the overall shape gradually increases in vertical dimension toward the rear.

The cushion front surface part 212 forms the front surface of the airbag cushion 208, and is expanded and deployed conforming to the seat rear surface part 214 (see FIG. 12).

A cushion upper surface part 218 forms the upper surface of the airbag cushion 208, and extends rearward from the upper end of the cushion front surface part 212 while sloping slightly downward.

The cushion lower surface part 220 is a portion that forms the lower surface of the airbag cushion 208 and extends downward rearward from the lower end of the cushion front surface part 212.

The cushion rear surface part 210 is a portion that forms the rear surface of the airbag cushion 208, and connects the rear end of the cushion upper surface part 218 and the rear end of the cushion lower surface part 220 in the vertical direction. The cushion rear surface part 210 extends from the cushion upper surface part 218 toward the cushion lower surface part 220 while sloping forward.

The cushion front surface part 212 is formed with a flat part 222 and a bulge part 224. The flat part 222 is a flat area formed on the lower side of the cushion front surface part 212, and is provided with the gas receiving part 120 (see FIG. 10(b)).

The bulge part 224 is formed on the upper side of the cushion front surface part 212 and has a shape that bulges forward more than the flat part 222. The cushion front surface part 212 has an upper side where the bulge part 224 is present, which presses more firmly against the seat rear surface part 214 (see FIG. 12). Therefore, when the airbag cushion 208 restrains the occupant 230, it is possible to suppress upward rotational movement around the gas receiving part 120 as a fulcrum.

The cushion rear surface part 210 extends along the shins 234 of the occupant 230 normally seated in the rear seat 204. Since the above-mentioned bulge part 224 is provided at the diagonal corner of the cushion rear surface part 210, the airbag cushion 208 is able to distribute the load received from the cushion rear surface part 210 from the bulge part 224 to the seat rear surface part 214, thereby restraining the shins 234 of the occupant 230 while maintaining a stable orientation.

When viewed from the side, the airbag cushion 208 is shaped so that the angle α2 between the tangent line L3 to the cushion upper surface part 218 and the tangent line L4 to the cushion rear surface part 210 is an acute angle (0°<α2 <90°). In other words, an upper corner part 226 on the rear upper side of the airbag cushion 208 formed by the cushion upper surface part 218 and the cushion rear surface part 210 is formed to have an acute angle. This configuration enables the cushion rear surface part 210 to be deployed parallel to the shins 234 of the occupant 230 in the rear seat 204, thereby enabling broad restraint of the shins 234 of the occupant 230.

The auxiliary members 216 and 217 (see FIG. 10(b)) are deployed along the cushion lower surface part 220. Taking the auxiliary member 216 as an example, a first end 216a is connected to the cushion lower surface part 220 on the cushion rear surface part 210 side, and a second end 216b is connected to the inside of the stowing part 110 of the seat rear surface part 214. This configuration enables the tension of the auxiliary members 216 and 217 to be transmitted closer to the cushion rear surface part 210 side of the airbag cushion 208, enabling efficient suppression of swaying of the airbag cushion 208.

FIG. 12 is a diagram that depicts the process of the airbag cushion 208 of FIG. 9(b) restraining the occupant 230. The occupant 230 can be anyone from a small female to a large male, similar to the occupant 150 in FIG. 7(a) and the occupant 160 in FIG. 8(a).

The stowing part 110 and the airbag cushion 208 of the knee airbag device 200 are configured so that the airbag cushion 208 is expanded and deployed toward the knees 232 of an occupant 230 seated in a normal posture in the rear seat 204.

The airbag cushion 208 is installed so that the upper corner part 226 is positioned approximately slightly above the knees 232 of the occupant 230. Furthermore, the cushion rear surface part 210 is set so as to be approximately parallel to the area from the knees 232 to the shins 234 of the occupant 230 when viewed from the side.

When the occupant 230 moves forward due to inertia such as a frontal collision, the knees 232 of the occupant 230 enter the cushion rear surface part 210. For the airbag cushion 208, when the knees 232 of the occupant 230 come into contact with the airbag cushion rear surface part 210, the cushion front surface part 212 comes into contact with the seat rear surface part 214, absorbing the load from the occupant 230 and restraining the occupant 230.

The airbag cushion 208 expands and deploys so that the cushion rear surface part 210 is parallel to the area from the knees 232 to the shins 234 of the occupant 230, so that the area around the knees 232 of the occupant 230 is fully supported and the kinetic energy of the occupant 230 can be efficiently absorbed in an emergency.

The airbag cushion 208 has a bulge part 224 of the cushion front surface part 212 provided above the flat part 222. Therefore, when the knees 232 of the occupant 230 come into contact with the cushion rear surface part 210, the upper bulge part 224 of the cushion front surface part 212 presses against the seat rear surface part 214. Thereby, the airbag cushion 208 can be prevented from rotating upward around the vicinity of the inflator 116.

The auxiliary members 216 and 217 not only suppress the up and down swaying of the airbag cushion 208 when the airbag cushion is expanded and deployed, but also suppress the upward movement of the airbag cushion 208 when restraining an occupant. The auxiliary members 216 and 217 stabilize the posture of the airbag cushion 208 when restraining the occupant, and prevent the occupant 230 from moving toward the front seat 202. Therefore, the present embodiment, can provide a vehicle rear seat occupant protection device with improved occupant restraint performance.

The auxiliary members 216 and 217 can also be applied to the cushion lower surface part 124 of the airbag cushion 108 in FIG. 3. The airbag cushion 108 also has auxiliary members 216 and 217 that are stretched between the cushion lower surface part 124 and the vicinity of the stowing part 110, thereby enabling suppression of up and down swaying when expanded and deployed, and upward movement when an occupant is restrained.

Preferred examples of the present invention were described above while referring to the attached drawings. However, the embodiments described above are preferred examples of the present invention, and other embodiments can be implemented or performed by various methods. In particular, unless described otherwise in the specification of the present application, the invention is not limited to the shape, size, configurational disposition, and the like of parts illustrated in detail in the attached drawings. Furthermore, expressions and terms used in the specification of the present application are used for providing a description, and the invention is not limited thereto, unless specifically described otherwise.

Therefore, a person of ordinary skill in the art could obviously conceive of various changed examples or modified examples within the scope described in the scope of the claims, which is understood to naturally belong to the technical scope of the present invention.

### INDUSTRIAL APPLICABILITY

The present invention can be used in a vehicle rear seat occupant protection device that restrains rear seat occupants.

### DESCRIPTION OF CODES

100. Airbag device, 102. Front seat, 104. Rear seat, 106. Seatback, 108. Airbag cushion, 110. Stowing part, 112. Seat rear surface part, 112a. Rear surface upper part, 112b. Rear surface curved part, 114. Opening part, 116. Inflator, 118. Cushion front surface part, 118a. Front surface upper part, 118b. Front surface bulge part, 120. Gas receiving part, 122. Cushion upper surface part, 124. Cushion lower surface part, 126. Cushion rear surface part, 128. Upper corner part, 130. Seat cushion, 132. Main panel, 134a, 134b. Side panel, 136. Through hole, 138. Bolt hole, 140a. Upper folded part, 140b. Lower folded part, 142. Central part, 150. Occupant, 152. Knee, 154. Head part, 156. Chest, 158. Thigh, 160. Occupant, 162. Knee, 164. Thigh, L1. Tangent line, L2. Tangent line, 200. Knee airbag device, 202. Front seat, 204. Rear seat, 206. Seatback, 208. Airbag cushion, 210. Cushion rear surface part, 212. Cushion front surface part, 214. Seat rear surface part, 216, 217. Auxiliary member, 216a, 217a. First end, 216b, 217b. Second end, 218. Cushion upper surface part, 220. Cushion lower surface part, 222. Flat part, 224. Bulge part, 226. Upper corner part, 230. Occupant, 232. Knee, 234. Shin, L3. Tangent line

## Claims

1. A vehicle rear seat occupant protection device, comprising:
a seat rear surface part that forms a rear surface of a seatback of a vehicle seat;
an airbag cushion that is stowed in the seat rear surface part in a prescribed stowed state and that expands and deploys between the seat rear surface part and a rear seat occupant seated in a rear seat located rearward of the vehicle seat; and
an inflator that supplies gas to the airbag cushion, wherein
the airbag cushion includes:
a cushion front surface part that extends in a vertical direction along the seat rear surface part;
a cushion upper surface part that extends rearward from an upper end of the cushion front surface part;
a cushion lower surface part that extends rearward from a lower end of the cushion front surface part; and
a cushion rear surface part that connects a rear end of the cushion upper surface part and a rear end of the cushion lower surface part in the vertical direction, and
the cushion front surface part includes:
a flat part that extends along the seat rear surface part; and
a bulge part that is formed above or below the flat part and protrudes forward relative to the flat part.

2. The vehicle rear seat occupant protection device according to claim 1, wherein the seat rear surface part includes:
a rear surface upper part near an upper end of the seatback; and
a rear surface curved part that extends from the rear surface upper part toward a seat cushion of the seat below while curving convexly forward, wherein
the flat part extends along the rear surface upper part, and
the bulge part is formed below the flat part and bulges forward conforming to the rear surface curved part.

3. The vehicle rear seat occupant protection device according to claim 2, wherein when the airbag cushion is viewed from the side, a tangent line to the cushion upper surface part and a tangent line to the cushion rear surface part intersect at an acute angle.

4. The vehicle rear seat occupant protection device according to claim 3, wherein when the head part of the rear seat occupant comes into contact with the corner part between the cushion upper surface part and the cushion rear surface part, the cushion front surface part comes into contact with the seat rear surface part and the cushion lower surface part comes into contact with the thighs of the rear seat occupant.

5. The vehicle rear seat occupant protection device according to claim 1, further comprising a gas supply part provided on the seat rear surface part for supplying gas to the airbag cushion.

6. The vehicle rear seat occupant protection device according to claim 5, wherein the airbag cushion further comprises a gas receiving part formed on the flat part and connected to the gas supply part.

7. The vehicle rear seat occupant protection device according to claim 1,
wherein the airbag cushion includes:
a pair of side panels that form airbag side surface parts on both sides in a width direction of the airbag cushion; and
a strip-shaped main panel that connects edges of the pair of side panels to form the cushion front surface part, the cushion upper surface part, the cushion lower surface part, and the cushion rear surface part.

8. The vehicle rear seat occupant protection device according to claim 7, wherein, when viewed from the side, the airbag cushion in the stowed state includes:
an upper folded part in which a portion above the gas receiving part is wound or folded toward the gas receiving part; and
a lower folded part in which a portion below the gas receiving part is wound or folded toward the gas receiving part.

9. The vehicle rear seat occupant protection device according to claim 1, wherein the bulge part is formed above the flat part.

10. The vehicle rear seat occupant protection device according to claim 9, wherein the cushion rear surface part extends along the shins of a rear seat occupant properly seated in the rear seat.

11. The vehicle rear seat occupant protection device according to claim 10, wherein when the airbag cushion is viewed from the side, a tangent line to the cushion upper surface part and a tangent line to the cushion rear surface part intersect at an acute angle.

12. The vehicle rear seat occupant protection device according to claim 2 or claim 9, wherein the airbag cushion further includes an auxiliary member that is strip-shaped, has a first end connected to the cushion lower surface part, and a second end connected to the seat rear surface part, and the auxiliary member extends conforming to the cushion lower surface part.

13. The vehicle rear seat occupant protection device according to claim 12, wherein the first end is connected to the cushion rear surface part side of the cushion lower surface part.
